# EUROPEAN PATENT APPLICATION

(11) **EP 2 282 260 A2**
(43) Date of publication of application: **09.02.2011**
(21) Application number: 09252605.2
(22) Date of filing: 12.11.2009
(51) Int. Cl.: G06F 3/06

(54) **Erasure coded data storage capacity and power management**

(30) Priority: 30.07.2009 US 512642
(71) Applicant: LSI Corporation, Milpitas, CA 95035 (US)
(72) Inventor: Ross, Zwisler, Lafayette Colorado 80026 (US); McKean, Brian, Longmont Colorado 80503 (US); Kidney, Kevin, Lafayette Colorado 80026 (US)
(74) Representative: Hackett, Sean James

(57) **Abstract**

A set of data is allocated into a plurality of data chunks, wherein the plurality of data chunks is thinly provisioned and erasure coded (110). A plurality of storage devices (230) is divided into a first and a second set of storage devices, wherein the first set of storage devices (140) is powered up and the second set of storage devices is powered down. The data chunks are distributed on the first set of storage devices to equally load each of the first set of storage devices. A storage device from the second set of storage devices is powered up to reassign the storage device from the second set of storage devices to the first set of storage devices. Data chunks are migrated to a reassigned storage device (150) until the data chunks are evenly distributed on the first set of storage devices and the reassigned storage device.

## Description

### TECHNICAL FIELD

The present disclosure generally relates to the field of computer data storage, and more particularly to systems and methods for managing capacity and power usage of mass data storage systems.

### BACKGROUND

Data centers utilize disk drives for the storage and retrieval of electronic data. Various methods exist for increasing the capacity of mass data storage systems, as well as for managing the number of disk drives required by a data storage system.

### SUMMARY

A method includes, but is not limited to: allocating a set of data into a plurality of data chunks, wherein the plurality of data chunks is thinly provisioned and erasure coded; dividing a plurality of storage devices into a first and a second set of storage devices, wherein the first set of storage devices is powered up and the second set of storage devices is powered down; loading the plurality of data chunks on the first set of storage devices to equally load each of the first set of storage devices; powering up a storage device from the second set of storage devices to reassign the storage device from the second set of storage devices to the first set of storage devices; and migrating data chunks of the plurality of data chunks to a reassigned storage device until the plurality of data chunks is evenly distributed on the first set of storage devices and the reassigned storage device.

A system includes, but is not limited to: means for allocating a set of data into a plurality of data chunks, wherein the plurality of data chunks is thinly provisioned and erasure coded; means for dividing a plurality of storage devices into a first and a second set of storage devices, wherein the first set of storage devices is powered up and the second set of storage devices is powered down; means for loading the plurality of data chunks on the first set of storage devices to equally load each of the first set of storage devices; means for powering up a storage device from the second set of storage devices to reassign the storage device from the second set of storage devices to the first set of storage devices; and means for migrating data chunks of the plurality of data chunks to a reassigned storage device until the plurality of data chunks is evenly distributed on the first set of storage devices and the reassigned storage device.

A mass storage system, includes, but is not limited to: a processor for allocating a set of data into a plurality of data chunks, wherein the plurality of data chunks is thinly provisioned and erasure coded; a plurality of storage devices communicatively coupled to the processor for storing the plurality of data chunks, the plurality of storage devices divided into a first and a second set of storage devices, wherein the first set of storage devices in powered up and the second set of storage devices is powered down; and a controller communicatively coupled to the plurality of storage devices configured for controlling the operation of the plurality of storage devices; wherein the controller loads the plurality of data chunks on the first set of storage devices to equally load the first set of storage devices, powers up a storage device from the second set of storage devices to reassign the storage device from the second set of storage devices to the first set of storage devices, and migrates data chunks of the plurality of data chunks to a reassigned storage device until the plurality of data chunks in evenly distributed on the first set of storage devices and the reassigned storage device.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

The numerous advantages of the disclosure may be better understood by those skilled in the art by reference to the accompanying figures in which:
FIG. 1 is a flow chart illustrating a mass storage data capacity expansion method in accordance with an embodiment of the present disclosure;
FIGS. 2A through 2C are block diagrams illustrating a plurality of storage devices proceeding with a mass storage data capacity management in accordance with an embodiment of the present disclosure; and
FIG. 3 is a block diagram illustrating a mass storage system capable of performing a mass storage data capacity expansion in accordance with an embodiment of the present disclosure.

### DETAILED DESCRIPTION

Reference will now be made in detail to the subject matter disclosed, which is illustrated in the accompanying drawings.

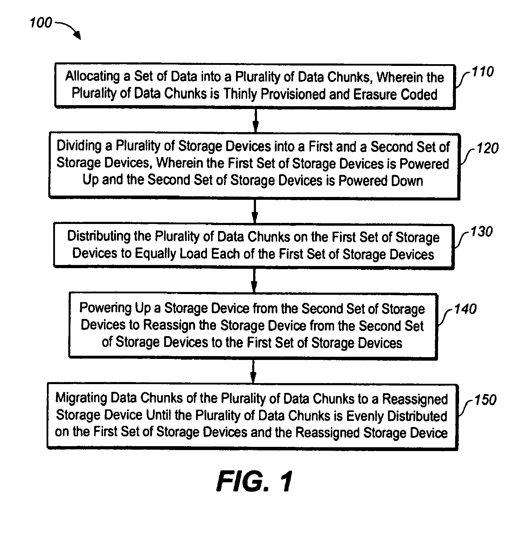

Referring to FIG. 1, a method for processing data in a mass data storage system in accordance with an exemplary embodiment of the present disclosure is shown.

In a current embodiment of the present disclosure, method 100 may include the step of allocating a set of data into a plurality of data chunks, wherein the plurality of data chunks is thinly provisioned and erasure coded 110. For example, a Redundant Array of Independent Disks (RAID) 5 or RAID 6 erasure coding scheme may be utilized to encode the set of data.

In exemplary embodiments, the method 100 may further include the step of dividing a plurality of storage devices into a first and a second set of storage devices, wherein the first set of storage devices is powered up and the second set of storage devices is powered down 120. For example, the storage devices may be hard disk drives. The first set of storage devices may contain the minimum number of storage devices required to store the set of data. The first set of storage devices may be known as the active set. The minimum number of storage devices may be dependent on the data capacity of the active set, the amount of data stored on the mass data storage system, and the erasure coding scheme used to encode the set of data. The storage devices in the active set may always be powered up. The data stored on the storage devices in the active set may be accessed without any power up delay. All data stored on the mass data storage system may be stored on the storage devices in the active set.

Further, the second set of storage devices may be known as the passive set. The storage devices in the passive set may be powered down, thereby conserving energy. The storage devices in the passive set may not store any data, or may not store any data that is not available on the storage devices in the active set.

In exemplary embodiments, the method 100 may further include the step of distributing the plurality of data chunks on the first set of storage devices to equally load each of the first set of storage devices 130. For example, the plurality of data chunks may be distributed according to the Controlled Replication Under Scalable Hashing (CRUSH) algorithms as described in "CRUSH: Controlled, Scalable, Decentralized Placement of Replicated Data," Sage Weil, Scott A. Brandt, Ethan L. Miller, Carlos Maltzahn, Proceedings of SC '06, November 2006, which is incorporated by reference.

In exemplary embodiments, the method 100 may further include the step of powering up a storage device from the second set of storage devices to reassign the storage device from the second set of storage devices to the first set of storage devices 140. Powering up the storage device may reassign the storage device from the passive set to the active set. The step of powering up a storage device from the second set of storage devices to reassign the storage device from the second set of storage devices to the first set of storage devices 140 may require monitoring the capacity of the storage devices in the active set to determine whether additional capacity is required in the active set. Although only a single storage device is disclosed as being reassigned from the passive set to the active set, it is further contemplated that multiple storage devices may be reassigned.

In exemplary embodiments, the method 100 may further include the step of migrating data chunks of the plurality of data chunks to a reassigned storage device until the plurality of data chunks is evenly distributed on the first set of storage devices and the reassigned storage device 150. Migrating data chunks may occur only upon the reassigned storage device becoming fully active.

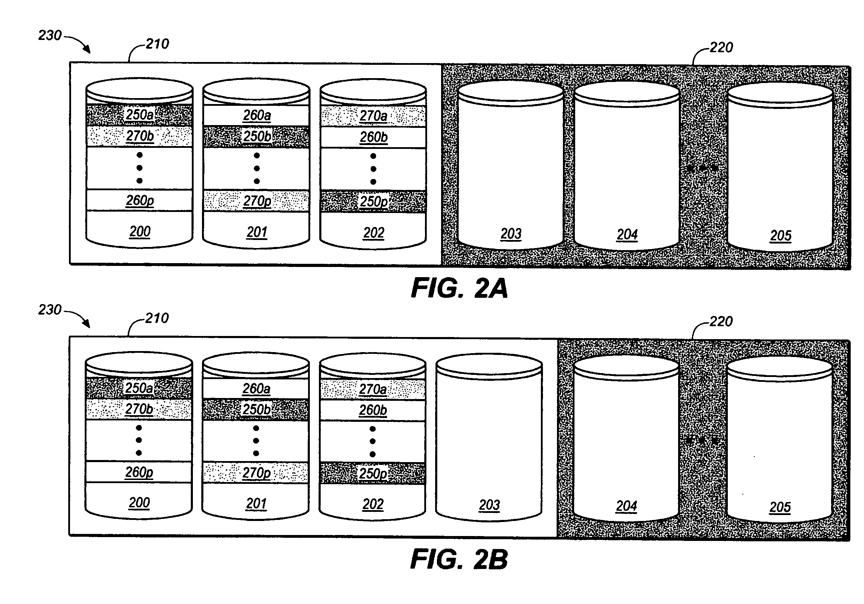

Referring to FIGS. 2A-2C, a plurality of storage devices 230 is shown performing the method 100 according to an embodiment of the present disclosure. In FIGS. 2A-2C, the plurality of data stripes (250, 260, 270, 280) are encoded using a 2+1 RAID 5 erasure coding scheme. This encoding scheme requires a minimum number of three storage devices 200-202 in the active set 210. Each 2+1 RAID 5 data stripe (250, 260, 270, 280) has been allocated into three data chunks (e.g., 250a, 250b, and 250p). Referring to FIG. 2A, each of data stripe 250, 260, 270 has been allocated into three data chunks and distributed among active set 210. Passive set 220 is comprised of hard disk drives 203-205.

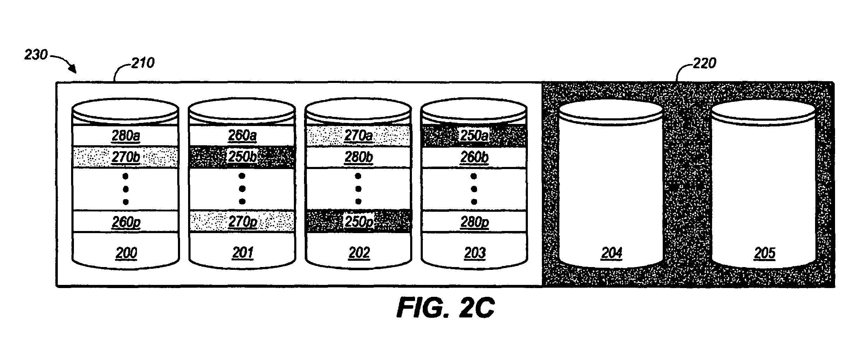

Referring to FIG. 2B, it has been determined that additional storage capacity is required in active set 210. Hard disk drive 203 is powered up and thereby reassigned from passive set 220 to active set 210. Referring to FIG. 2C, hard disk drive 203 has become a fully active hard disk drive of active set 210. Various data chunks from hard disk drives 200-202 have been migrated to hard disk drive 203. As shown in FIG. 2A-C, hard disk drive 203 may be reassigned from passive set 220 to active set 210. The erasure coding scheme of plurality of storage devices 230 may remain consistent through the reassignment process. Reassigning hard disk drive 203 from passive set 220 to active set 210 may not require performing data restriping on plurality of storage devices 230.

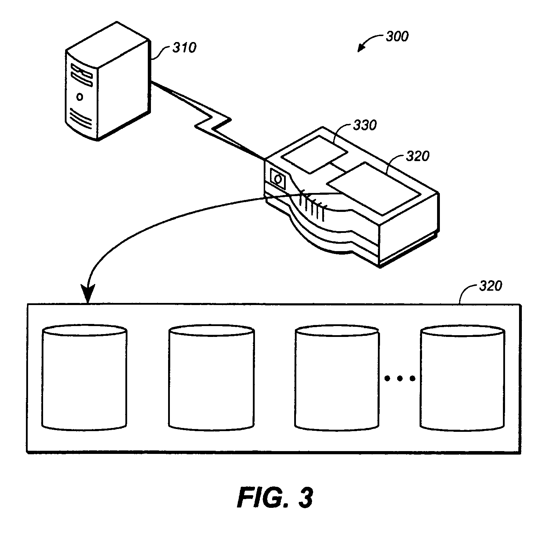

Referring to FIG. 3, a mass storage system 300 may perform the method 100 according to an embodiment of the present disclosure. Processor 310 may allocate a set of data into a plurality of data chunks. A plurality of storage devices 320 (ex. - plurality of storage devices 230 of FIGS. 2A-C) may be communicatively coupled to processor 310. Plurality of storage devices 320 may store the plurality of data chunks. Controller 330 may be communicatively coupled to plurality of storage devices 320. Controller 330 may be configured for controlling the operation of the plurality of storage devices 320.

Controller 330 may be configured to load the plurality of data chunks on the plurality of storage devices 320. The plurality of data chunks may be loaded equally on the active set of the plurality of storage devices 320. Controller 330 may power up a storage device from the passive set of the plurality of storage devices 320. Controller 330 may reassign a storage device from the passive set to the active set of the plurality of storage devices. Controller 330 may migrate data chunks from the plurality of data chunks until the plurality of data chunks is evenly distributed on the active set of storage devices and the reassigned storage device.

It is further contemplated that data may be migrated in a reverse direction from a storage device in the active set to the other storage devices of the active set. The storage device in the active set with no data not duplicated in the other storage devices in the active set may then be powered down. The powered down storage device may be reassigned to the passive set of storage devices. Referring again to FIGS. 2A-C, the figures may be viewed in a reverse sequence than previously viewed above. Referring to FIG. 2C, it has been determined that the capacity of hard disk drive 203 is no longer required in active set 210. Referring to FIG. 2B, all data in hard disk drive 203 has been migrated to hard disk drives 200-202 of active set 210. As shown in FIG. 2B, all data in hard disk drive 203 may be erased. However, this erasure may not be required and may not be preferred. Once all data in hard disk drive 203 has been migrated to hard disk drives 200-202 of active set 210, hard disk drive 203 may be powered down. Referring to FIG. 2A, hard disk drive 203 may be reassigned from active set 210 to passive set 220.

In the present disclosure, the methods disclosed may be implemented as sets of instructions or software readable by a device. Further, it is understood that the specific order or hierarchy of steps in the methods disclosed are examples of exemplary approaches. Based upon design preferences, it is understood that the specific order or hierarchy of steps in the method can be rearranged while remaining within the disclosed subject matter. The accompanying method claims present elements of the various steps in a sample order, and are not necessarily meant to be limited to the specific order or hierarchy presented.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in standard integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies equally regardless of the particular type of signal bearing media used to actually carry out the distribution. Examples of a signal bearing media include, but are not limited to, the following: recordable type media such as floppy disks, hard disk drives, CD ROMs, digital tape, and computer memory; and transmission type media such as digital and analog communication links using TDM or IP based communication links (e.g., packet links).

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

## Claims

1. A method, comprising:
allocating a set of data into a plurality of data chunks, wherein the plurality of data chunks is thinly provisioned and erasure coded;
dividing a plurality of storage devices into a first and a second set of storage devices, wherein the first set of storage devices is powered up and the second set of storage devices is powered down;
distributing the plurality of data chunks on the first set of storage devices to equally load each of the first set of storage devices;
powering up a storage device from the second set of storage devices to reassign the storage device from the second set of storage devices to the first set of storage devices; and
migrating data chunks of the plurality of data chunks to a reassigned storage device until the plurality of data chunks is evenly distributed on the first set of storage devices and the reassigned storage device.

2. The method of claim 1, wherein the plurality of data chunks is encoded utilizing a Redundant Array of Independent Disks (RAID) 5 or RAID 6 encoding.

3. The method of claim 1, the distributing the plurality of data chunks on the first set of storage devices to equally load each of the first set of storage devices further includes:
distributing the plurality of data chunks on the first set of storage devices to equally load each of the first set of storage devices utilizing Controlled Replication Under Scalable Hashing (CRUSH) algorithms.

4. The method of claim 1, wherein the first set of storage devices includes a minimum number of storage devices.

5. The method of claim 4, wherein the minimum number of storage devices is determined by the requirements of the erasure coding scheme utilized to encode the plurality of data chunks and the amount of data stored on the first set of storage devices

6. The method of claim 1, wherein the powering up a storage device from the second set of storage devices to reassign the storage device from the second set of storage devices to the first set of storage devices further includes:
monitoring the capacity of the first set of storage devices to determine whether additional storage capacity is required.

7. The method of claim 1, wherein the migrating data chunks of the plurality of data chunks occurs upon the storage device from the second set of storage devices becoming fully active.

8. A mass storage system, comprising:
a processor for allocating a set of data into a plurality of data chunks, wherein the plurality of data chunks is thinly provisioned and erasure coded;
a plurality of storage devices communicatively coupled to the processor for storing the plurality of data chunks, the plurality of storage devices divided into a first and a second set of storage devices, wherein the first set of storage devices in powered up and the second set of storage devices is powered down; and
a controller communicatively coupled to the plurality of storage devices configured for controlling the operation of the plurality of storage devices;
wherein the controller loads the plurality of data chunks on the first set of storage devices to equally load the first set of storage devices, powers up a storage device from the second set of storage devices to reassign the storage device from the second set of storage devices to the first set of storage devices, and migrates data chunks of the plurality of data chunks to a reassigned storage device until the plurality of data chunks is evenly distributed on the first set of storage devices and the reassigned storage device.

9. The system of claim 8, wherein the plurality of data chunks is distributed utilizing Controlled Replication Under Scalable Hashing (CRUSH) algorithms.

10. The system of claim 8, wherein the first set of storage devices contains a minimum number of storage devices.

11. The system of claim 10, wherein the controller determines the minimum number of storage devices based on the requirements of the erasure coding scheme utilized to encode the plurality of data chunks and the amount of data stored on the first set of storage devices.

12. The system of claim 8, wherein the controller further monitors the capacity of the first set of storage devices to determine whether additional storage capacity is required.

13. The system of claim 8, wherein the controller migrates data chunks upon the reassigned storage device becoming fully active.
